# NEW EUROPEAN PATENT SPECIFICATION

(11) **EP 0 206 814 B2**
(45) Date of publication and mention of the opposition decision: **13.12.1995**
(45) Mention of the grant of the patent: 20.06.1990
(21) Application number: 86304893.0
(22) Date of filing: 25.06.1986
(51) Int. Cl.: C08F 220/06, C02F 5/12

(54) **Water-soluble polymers and their use in the stabilization of aqueous systems**
Wasserlösliche Polymere und deren Verwendung bei der Stabilisierung von wässrigen Systemen
Polymères solubles dans l'eau et leur usage dans la stabilisation de systèmes aqueux

(30) Priority: 26.06.1985 US 749059; 07.05.1986 US 861732
(43) Date of publication of application: 30.12.1986
(73) Proprietor: ROHM AND HAAS COMPANY, Philadelphia Pennsylvania 19105 (US)
(72) Inventor: Amick, David Richard, Chalfont Pennsylvania 18914 (US); Hann, William Mathis, Pennsburg Pennsylvania 18073 (US); Natoli, John, Ambler Pennsylvania 19002 (US)
(74) Representative: Angell, David Whilton

(56) References cited:
- EP-A- 0 171 048
- EP-A- 0 184 894
- WO-A-83/02607
- GB-A- 2 082 600
- JP-A-81 115 630
- US-A- 3 806 376

## Description

This invention is concerned with the water-soluble copolymers, terpolymers and interpolymers formed by polymerizing together selected monomers in certain selected weight percentages, and their use in stabilizing aqueous systems such as cooling towers.

Many industrial applications and residential areas utilize water containing relatively high concentrations of inorganic salts. Those salts, which are formed by the reaction of metal cations, such as calcium, magnesium or barium, with inorganic anions, such as phosphate, carbonate or sulfone, have low solubilities in water and tend to precipitate from solution, crysallize and form hard deposits or scale on surfaces as their concentration in solution increases, or as the pH or temperature of the water containing them increases. Scale formation is a problem in heat transfer devices, boilers, secondary oil recovery wells and on clothes washed with such hard waters.

Many cooling water systems, including industrial cooling towers and heat exchangers, made from carbon steel experience corrosion problems caused by the presence of dissolved oxygen. Corrosion is combated by the addition of various inhibitors such as orthophosphate compounds and/or zinc compounds. The addition of phosphates, however, can add to the formation of highly insoluble phosphate salts such as calcium phosphate. The addition of zinc compounds can also lead to the precipitation of insoluble salts such as zinc hydroxide and zinc phosphate. Other inorganic particulates, such as mud, silt and clay, are commonly found in cooling water and tend to settle onto surfaces and thereby restrict water flow and heat transfer unless they are effectively dispersed.

The stabilization of aqueous systems containing scale-forming salts and inorganic particulates involves one or a combination of mechanisms. Anti-precipitation involves the delay of precipitation by limiting the size of the salts to sub-colloidal dimensions, possibly by adsorption of a precipitation inhibitor onto the salt crystal soon after nucleation, thereby interfering with further crystal growth. Dispersion of the precipitated salt crystals is another stabilization mechanism believed to be the result of the adsorption of the inhibitor onto precipitated crystals, thereby imparting an electronegative charge which retards agglomeration, settling and deposition on surfaces by repulsive forces. Th adsorption of the inhibitor can also be used to stabilize aqueous systems by facilitating the dispersion and subsequent removal therefrom of other suspended particulates, such as mud, silt and clay, and metals such as iron and zinc and their insoluble salts. Another stabilization mechanism involves the ability of the inhibitor to interfere with, and distort, the crystal structure of the scale, making the scale more easily fracturable and dispersable.

Polymers derived from (meth)acrylic acids and salts thereof, as well as mixtures of such polymers with other compounds and polymers, such as phosphonic acids, have long been used as precipitation inhibitors for aqueous systems. Copolymers of (meth)acrylic acids and vinyl esters, such as hydroxy ethyl methacrylate and hydroxy propyl acrylate, and copolymers of (meth)acrylic acids and salts thereof with acrylamido alkyl or aryl sulfonates or unsubstituted acrylamides have also been used for water treatment. Terpolymers formed from acrylic acid, 2-acrylamido-2-methyl propane sulfonic acid (AMPS) and unsubstituted acrylamide have also been proposed to remove rust and tubercle from surfaces.

For example, US-A-3,578,589 is directed to the use of (meth)acrylic acid homopolymers and copolymers of acrylic acid with methacrylic acid for treating scale in aqueous systems. US-A-3,332,904; 3,692,673; 3,709,815; 3,709,816; 3,928,196; 3,806,367 and 3,898,037 are directed to AMPS-containing polymers and their use, for example, in treating aqueous systems. US-A-3,699,048 and 3,890,228 are directed to the use of phosphonic acids mixed with poly(meth)acrylates for water treatment. US-A-3,805,916 is directed to the use of polyacrylamides as dispersants in water-cooled industrial heat exchangers and cooling systems. GB-B-2082600 is directed to an acrylic acid, AMPSs, unsubstituted acrylamide polymer as a scale inhibitor, while WO 83/02607 and WO 83/02628 are directed to (meth)acrylic acid/AMPS copolymers for the same application. US-A-4,342,653 is directed to the use of AMPS copolymerized with unsubstituted acrylamide and optionally with acrylic acid for flocculating suspended solids, and US-A-4,404,111 is directed to the use of an aqueous composition comprising an AMPS/N,N-dimethylacrylamide copolymer in the recovery of petroleum from petroleum bearing formations. Other publications concerned with the use of polymers as scale inhibitors or dispersing agents include US-A-3,110,666; 4,457,847; 4,029,577; 4,209,398; 4,432,884; 4,432,879; and EP-A-0,108,842.

In addition, our US-A-4,517,098 and 4,530,766, and the references cited therein, disclose the use of low molecular weight (meth)acrylic copolymers for use in scale inhibition and dispersion of inorganic particulates in water.

Despite the large number of publications in this area disclosing stabilization, e.g. scale inhibition and/or dispersion, of aqueous systems utilizing polymers derived from one or more of (meth)acrylic acid, AMPS and ethylenically unsaturated monomers, no one conventional material or combinations has been found to be completely effective at low use levels, regardless of the pH and temperature of the aqueous system, for stabilizing aqueous systems containing all the various types of scale forming salts and suspended inorganic particulates commonly found in cooling tower waters. No one had, heretofore, recognised that, if certain known materials, used for these applications, were polymerized together in certain selected weight ratios to form a low molecular weight, water-soluble terpolymer or interpolymer, the best stabilization performance characteristics of each constituent could be achieved. As used herein, the term "terpolymer" refers to a polymer formed from three monomers, the term "interpolymer" refers to a polymer formed from at least four monomers, and the term "copolymer" refers to a polymer formed from only two monomers.

The accumulation of scale and deposits in various parts of a boiler circuit, can occur due to the presence of impurities in the feedwater. These impurities can come from several sources, such as operating upsets, leaks, procedural errors and inaccurate impurity analysis. Some common types of contamination in boiler feedwater are dissolved solids, gases, alkalinity, organics and corrosion products from returned condensate. When the hardness salts that are present in the feedwater are concentrated in the boiler and transported to hot surfaces, they form baked-on deposits and scales. These deposits or scales lead to excessive temperature build-up and potental rupture of the boiler tubes. Some typical deposits found in boilers are calcium phosphate, magnesium hydroxide, magnesium silicates and miscellaneous corrosion products, such as magnetite (Fe₃O₄), hematite (FeOOH) and iron phosphate.

There are two basic internal water treatment approaches to preventing scale and deposits from forming in boilers, involving either (a) precipitation of the impurities as an insoluble sludge, or (b) preventing precipitation completely through the use of chelating agents.

In connection with approach (b), polymers can function as chelating or sequestering agents, and in some instances are preferable to such commonly used chelants, such as ethylene diamine tetraacetic acid (EDTA) or nitrilotriacetic acid (NTA) because they have less tendency to corrode metal parts. The less corrosive tendency of polymers stems from their less aggressive binding of cations, such as iron, which means that they will have much less tendency to attack metal parts when there is a higher than stoichiometric level of chelant present in the recirculating boiler water. A difficulty with this approach is that even with polymers, the feedwater purity must be closely monitored to prevent excessive residual polymer from attacking the metal surfaces.

Approach (a) involves preventing deposit build-up by precipitating the feedwater hardness as an insoluble sludge that can be easily removed by blowdown in the boiler. In this approach, polymers are used to disperse the insoluble particulate material to prevent its adherence on hot surfaces and to prevent the sludge from forming a hard, compacted deposit in the mud drum that is difficult to remove. The most common precipitating agent used is phosphate, which will remove most of the calcium from the recirculating water as calcium phosphate. Thus, a major difference between the treatment of cooling water and boiler water with phosphates is that, in cooling water treatment, the calcium phosphate is prevented from precipitating and, in boiler water treatment, the calcium phosphate is allowed to precipitate but is kept dispersed by the polymer.

Polymers commonly used in boilers to disperse sludge or to chelate hardness cations include polyacrylic acid, polymethacrylic acid, copolymers of sulfonated styrene and maleic acid, and copolymers of acrylic acid and acrylamide.

We have unexpectedly found that aqueous systems such as boiler waters containing dissolved and suspended solids which are one or more of calcium carbonate, contain phosphate, magnesium hydroxide, serpentine, magnetite and hematite, can be stabilized by the addition thereto of an effective amount, e.g. from 0.1 to 500 ppm, preferably at least 1 ppm, of water-soluble terpolymers and interpolymers comprising (i) between 10 and 84 percent by weight of units derived from (meth)acrylic acids and/or salts thereof, (ii) greater than 11 to less than 40 percent by weight of units derived from acrylamido alkyl substituted and/or aryl substituted sulfonic acids and/or salts thereof, and (iii) from at least 5 to 50 percent by weight of units derived from one or more of vinyl esters, other than polyethylene- and polypropylene-glycol (meth)acrylates and the ether derivatives thereof, vinyl acetate and substituted acrylamides, the percentages being based on the total weight of (i), (ii) and (iii). These terpolymers and interpolymers, when added to aqueous systems, e.g. in small amounts, exhibit unexpectedly improved phosphate stabilization and stabilization of iron, zinc and salts thereof when compared with conventional additives, while maintaining their water-solubility. Certain preferred terpolymers and interpolymers also exhibit a high degree of hydrolytic stability at high pH conditions.

The terpolymers and interpolymers incorporate the beneficial scale inhibition and dispersion (referred to herein jointly as "stabilization") characteristics of each of the known monomers from which the polymers are formed, and result in unexpectedly improved performance as stabilizers for aqueus systems when compared with the corresponding convention homopolymers, copolymers and mixtures thereof.

The weight percent of the units derived from (meth)acrylic acids and/or salts thereof can vary between about 10 and about 84 percent, and preferably from at least about 30 percent. Suitable units derived from (meth)acrylic acids and salts thereof include those having the following structural formula (A): 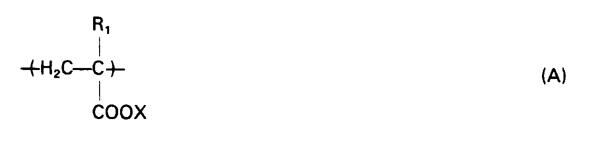
wherein
R₁ is hydrogen or CH₃ and
X is hydrogen, a metal cation or N-(R₂)₄ where R₂ is hydrogen, a C₁ to C₄ alkyl group, a C₁ to C₄ hydroxyalkyl group, or mixtures thereof.

The preferred (meth)acrylic acids and salts include acrylic acid, methacrylic acid and sodium salts thereof.

The weight percent of the units derived from acrylamido alkyl substituted and/or aryl substituted sulfonic acids and/or salts thereof (hereinafter referred to as "acrylamido alkyl substituted and/or aryl substituted sulfonates" for convenience) must be greater than 11 percent and less than about 40 percent by weight. If the concentration of the acrylamido alkyl substiuted and/or aryl substituted sulfonate units in the terpolymer or interpolymer is 11 weight percent or less, a significant drop-off in stabilization performance results, and if the concentration of this unit in the selected terpolymer or interpolymer is greater than 40 percent, the economic viability of the selected terpolymer or interpolymer suffers. Suitable units derived from acrylamido alkyl substituted and aryl substituted sulfonates include those represented by the following structural formula (B): 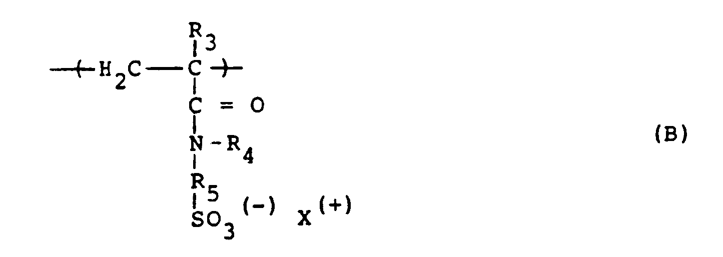
where
R₃ is hydrogen or methyl;
R₄ is hydrogen or a C₁ to C₄ alkyl group
R₅ is a C₁ to C₈ alkyl or a C₈ to C₁₀ aralkyl group; and
X is the same as defined in structural formula A above.

Suitable units derived from one or more of vinyl esters, vinyl acetate and substiuted acrylamide include the following:
Vinyl esters represented by the following structural formula (C): 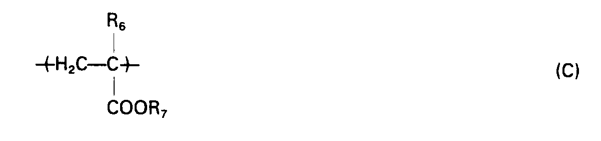
where
R₆ is hydrogen or CH₃; and
R₇ is a C₁ to C₆ alkyl group, a C₆ to C₁₀ aryl group, a C₆-C₁₀ aralkyl group or 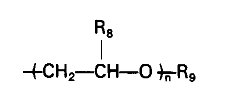
where
R₈ is hydrogen or CH₃;
R₉ is a C₁ to C₆ alkyl group or hydrogen; and
n is an integer of from 1 to 3;
Vinyl acetate represented by the following structural formula (D): 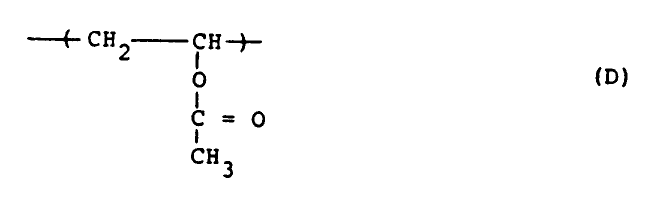
Substituted acrylamides represented by the following structural formula (E): 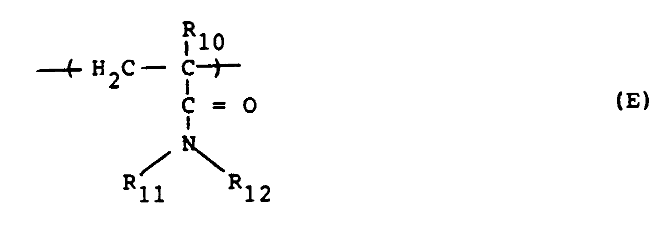
where
R₁₀ is hydrogen or CH₃; and
R₁₁ and R₁₂ are either hydrogen, a C₁ to C₈ alkyl, a C₆ to C₈ cycloalkyl, a benzyl group, or 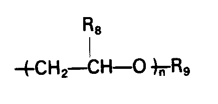
as defined in structural formula (C), such that R₁₁ and R₁₂ are not both hydrogen.

The vinyl esters represented by structural formula (C) are different from the (meth)acrylic acid salts represented by structural formula (A).

One or more of the units derived from vinyl esters, vinyl acetate and substituted acrylamides may be incorporated into the terpolymer or interpolymer, respectively.

The overall concentration, in the terpolymer or interpolymer, of the units derived from one or more of vinyl esters, vinyl acetate and substituted acrylamides ranges from at least 5 weight percent to 50 weight percent and preferably from 5 to 30 percent by weight.

The units derived from (meth)acrylic acids and/or salts derived thereof are cost effective precipitation inhibitors and dispersants capable of low levels of performance when used by themselves. The acrylamido alkyl substituted and/or aryl substituted sulfonate units provide improved calcium tolerance and phosphate stabilization characteristics to the component drived from (meth)acrylic acids and/or salts thereof, and improved stabilization when iron is present. We have found that the presence of the unit(s) derived from one or more of vinyl esters, vinyl acetate and substituted acrylamides unexpectedly increases the stabilization efficiency of the acrylamido alkyl substituted and/or aryl substituted sulfonate component for phosphate, zinc and inorganic particulates.

The water solubility of the selected terpolymer or interpolymer has also been found to be improved by the incorporation of vinyl ester- and/or acetate-derived units with the acrylamido alkyl substituted and/or aryl substituted sulfonate component in the selected weight ratios. When the terpolymers and interpolymers contain units derived from substituted acrylamides, and not vinyl esters or vinyl acetate, the hydrolytic stability of the polymers has been found to be unexpectedly improved.

If an interpolymer is formed containing units derived from two types of vinyl ester, the stabilization performances characteristics are not significantly improved as compared to a selected terpolymer containing the same concentration of only one of such monomer units.

2-acrylamido-2-methy propane sulfonic acid (AMPS) is the preferred substituted acrylamido sulfonate, and that hindered amides such as t-butyl acrylamides, t-octyl acrylamide and dimethylacrylamide are the preferred (alkyl) substituted acrylamides. Preferred vinyl esters include ethyl acrylate, hydroxy ethyl methacrylate, hydroxy propyl acrylate and cellosolve acrylate.

The terpolymers and interpolymers, useful in the method of the invention, containing the selected units in the selected weight percentages, typically have a low molecular weight, for example a weight average molecular weight from 3000 to 25,000, preferably from 4000 to 8000.

The preferred terpolymers of the invention contain 57 percent by weight of units derived from (meth)acrylic acid and/or salts thereof, 23 percent by weight of units derived from AMPS, and 20 percent by weight of units derived from one or more of vinyl esters, vinyl acetate and alkyl substituted acrylamides, and have a weight average molecular weight from 4500 to 5500.

Another preferred terpolymer which is stable to hydrolysis under high pH conditions comprises between 10 and 84 weight percent of units derived from acrylic acid, from greater than 11 to less than 40 weight percent of units derived from 2-acrylamido-2 methyl propane sulfonic acid and from at least 5 to 50 weight percent of units derived from substituted acrylamide.

The terpolymers and interpolymers of the present invention may be synthesized by the methods discussed below.

In general, the prior art discloses several suitable synthesis methods for preparing low molecular weight copolymers of (meth)acrylic acid. These methods can be used to prepare the terpolymers and interpolymers of the present invention.

US-A-4,314,004 is directed to one such suitable copolymer synthesis method. This method requires a specific concentration range of a polymerization initiator and a specific molar ratio range of the initiator concentration and the concentration of certain metal salts to obtain the desired low molecular weight polymers of the present invention. The preferred polymerization initiators are peroxide compounds, such as ammonium persulfate, potassium persulfate, hydrogen peroxide and t-butyl hydroperoxide. The preferred concentration range of the initiator is from 1 to 20 weight percent, based on the weight of the monomers. The metal salts used to regulate molecular weight preferably include cuprous and cupric chloride or bromide, cupric sulfate, cupric acetate, ferrous and ferric chloride, ferrous sulfate, and ferric and ferrous phosphate. The molar ratio of the polymerization initiator to the metal salt is preferably from 40:1 to 80:1. The terpolymer and interpolymers of the invention comprising units derived from (meth)acrylic acid are preferably prepared in water at a polymer concentration of 40 to 50 percent, based on the total weight of solution.

Another method useful to prepare these low molecular weight terpolymers and interpolymers is described in US-A-4,301,266. In this process isopropanol is used as the molecular weight regulator as well as the reaction solvent. The reaction solvent may also be an aqueous mixture of isopropanol containing at least 45 weight percent isopropanol. The polymerization initiator is a free radical initiator, such as hydrogen peroxide, sodium persulfate, potassium persulfate or benzoyl peroxide, and the polymerization is carried out under pressure at a temperature of 120 to 200°C. The concentration of the copolymer in the solvent is preferably 25 to 45 percent, based on the weight of the total solution. When polymerization is complete, the isopropanol is distilled from the reactor and the polymer may be neutralized with a base.

Still another method for peparing low molecular weight terpolymers and interpolymers of the invention is described in US-A-3,646,099. This process is directed to the preparation of cyano-containing oligomers; however, it is also applicable for preparing low molecular weight polymers of the present invention. This process employs a bisulfite salt as the polymerization molecular weight regulator and the resulting polymers prepared thereby are sulfonate terminated. The preferred bisulfite salt is sodium bisulfite at a concentration of between 3 and 20 weight percent, based on the weight of the monomers. The free radical polymerization initiator is ammonium, sodium or potassium persulfate, hydrogen peroxide or t-butyl hydroperoxide. The concentration of the initiator is from 0.2 to 10 weight percent, based on monomers, the polymerization temperature is preferably between 20 and 65°C, and the concentration of the polymers in the aqueous solvent is between 25 and 55 weight percent, based on total solution weight.

The following tests were performed using the terpolymers and intepolymers of the invention for stabilizing the precipitation of calcium phosphate in aqueous systems. Two different cooling waters were used: one having iron contamination and a low level of phosphate; the other without iron contamination but with a higher concentration of phosphate ions. The percent precipitation inhibition caused by the addition of the terpolymer, interpolymers or comparative conventional polymers was calculated using the formula:$\frac{\text{T}}{\text{I}} \text{× 100}$ where
T equals the parts per million (ppm) of phosphate ions remaining in solution at the conclusion of the test as analyzed using ascorbic acid method (APHA standard, 13th edition, page 532, 1971) and
I equals the ppm phosphate in the aqueous solution at the beginning of the test.

The following general procedure was used for both tests:
Stock solutions containing calcium ions (Ca⁺²) and optionally ferric (Fe⁺³) ions depending on the test, are prepared from the chloride salts at twice the concentration needed in the final test solution.

A second set of stock solutions containing phosphate ions (PC₄⁻³), using disodium phosphate, were prepared, also at twice the concentration needed in the final test solution.

Stock solutions containing 0.1 percent by weight of the active polymers, expressed as the acid form, were also prepared.

To a 118.3 ml (four ounce) jar the following were added in this order:
1. 50 ml of the phosphate stock solution;
2. 1 ml, 1.5 ml or 2.0 ml of the polymer stock solution to yield 10 ppm or 20 ppm active polymer, respectively; and
3.50 ml of the calcium ion stock solution.

The pH of each of the resultant mixtures was adjusted to pH 8.5. The jars were then capped and placed in a water bath at 70°C for 17 to 24 hours depending on the phosphate stock solution, as shown in Table 1. At the end of this period, the jars were removed from the bath, and the solutions were filtered using a 0.22 micrometer filter paper. The filtered solution was then analyzed for parts per million (ppm) phosphate using the ascorbic acid method. The reagent concentrations, polymer compositions, molecular weight and test results are illustrated in Table 1.

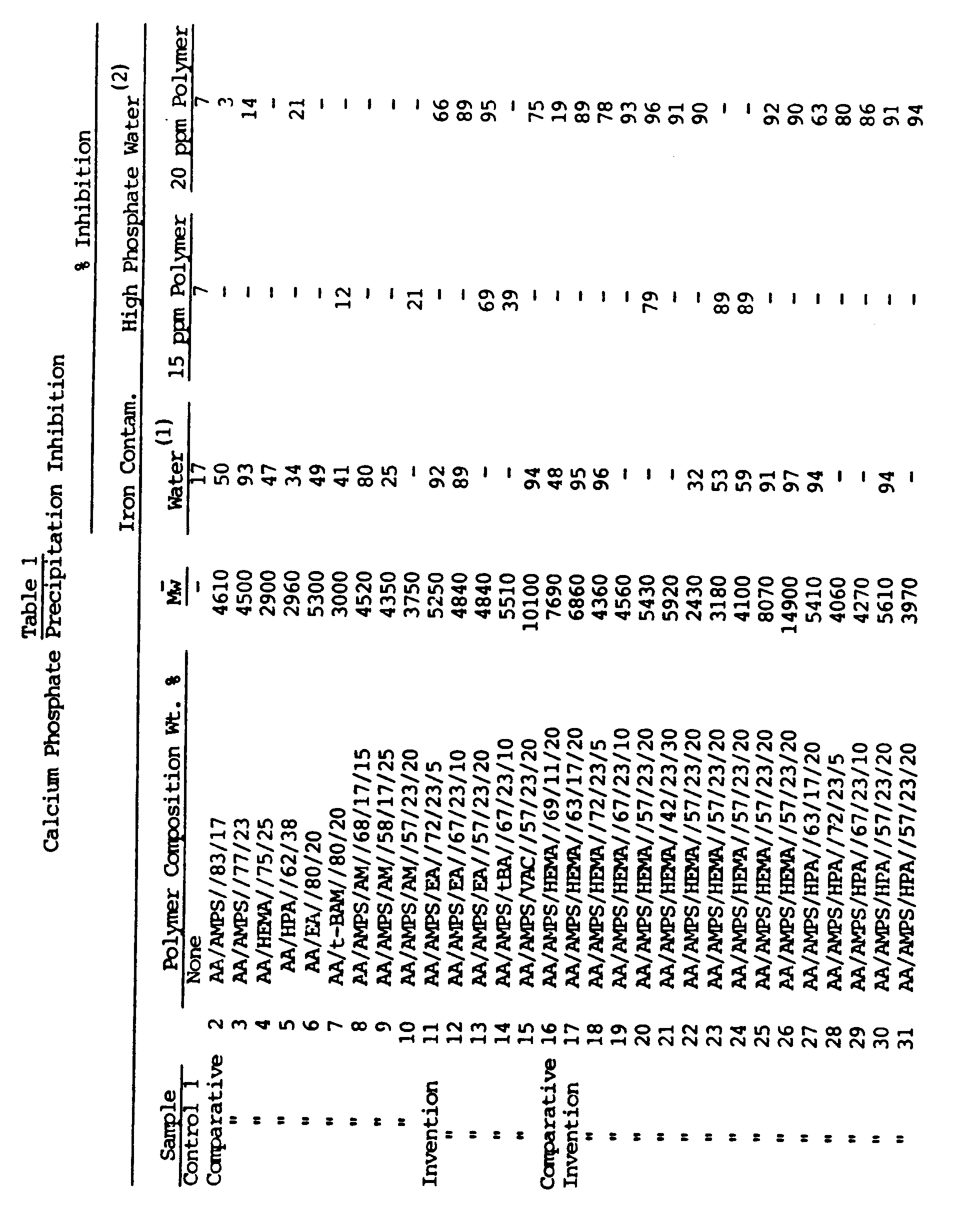

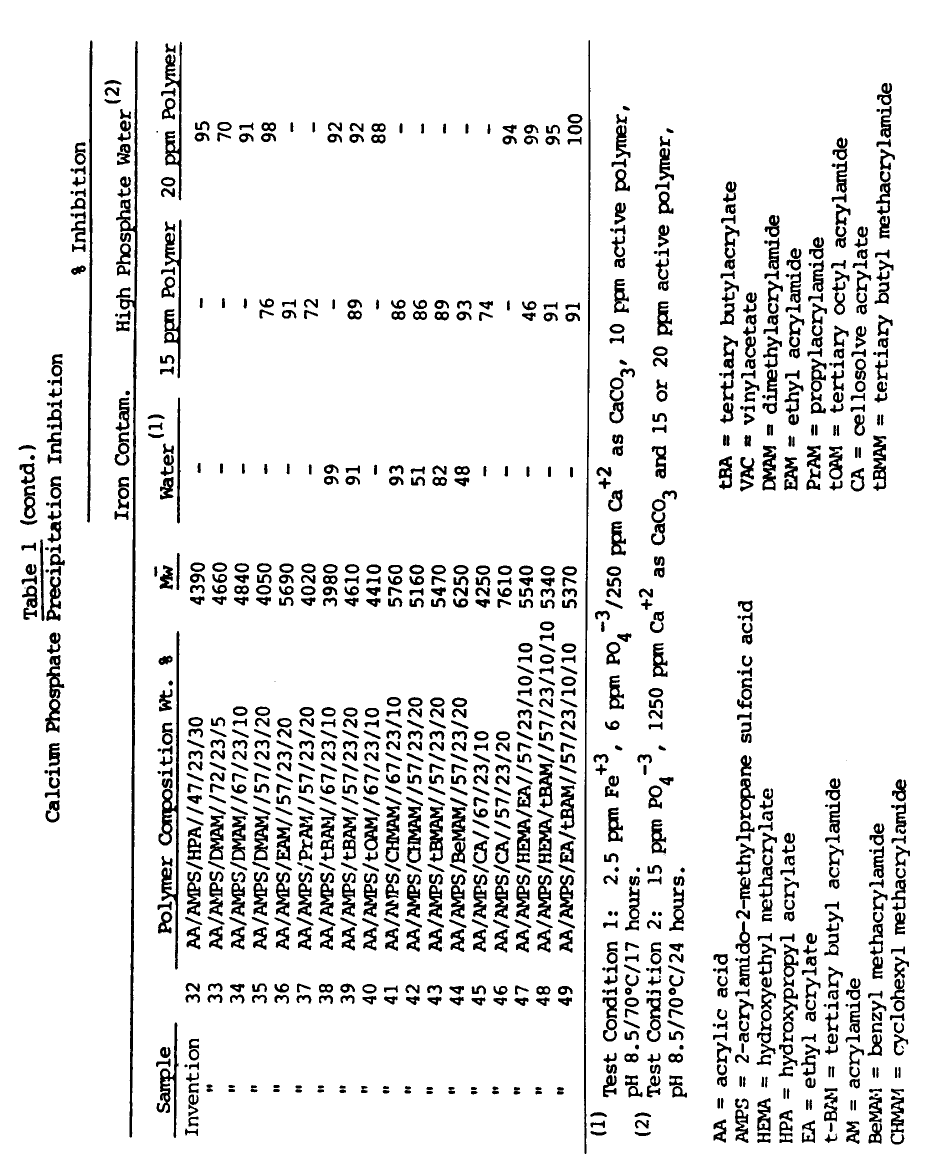

Examples 1-10 are shown for comparative purposes. Examples 11-49 illustrate that the terpolymers and interpolymers containing the selected units and concentrations exhibit improved phosphate stabilization over copolymers of acrylic acid and AMPS, acrylic acid and the same vinyl esters, and copolymers of acrylic acid and the alkyl substituted acrylamide. For example, samples 2 and 3 illustrate the phosphate stabilization of conventional low molecular weight acrylic acid/AMPS copolymers. Note that these copolymers exhibited poor phosphate stabilization (Test Condition 2) as compared with the selected terpolymers that also contain units of acrylic acid and AMPS, for example, sample 18. In addition, sample 4, a copolymer of acrylic acid and hydroxyethyl methacrylate, showed poor stabilization of the iron and phosphate containing water while samples 17 and 18 illustrate the marked improvement using a selected terpolymer. A conventional copolymer of acrylc acid and hydroxy propyl acrylate (Sample 5) also performed poorly as compared with samples 27-32 which utilized a selected acrylic acid/AMPS/HPA terpolymer. The acrylic acid/alkyl substituted acrylamide copolymer of sample 7 also showed poor phosphate and iron stabilization as compared with the selected terpolymers of the invention containing substituted acrylamides, for example, samples 38 and 39. Furthermore, even the comparative terpolymers formed from acrylic acid, AMPS and unsubstituted acrylamide showed poorer performance as compared with the acrylic acid/AMPS/substituted acrylamide or vinyl ester terpolymers of the invention. Samples 16 and 17 illustrate the need for greater than 11 percent AMPS units in the selected terpolymer.

Samples 11-13 (ethyl acrylate), 15 (vinyl acetate), 14 (tertiary butyl acrylate), 16-26 (hydroxy ethyl methacrylate), 27-32 (hydroxy propyl acrylate) and 45 and 46 (cellosolve acrylate) show the advantage of the selected terpolymers incorporating at least 5 percent by weight vinyl ester units as compared to an acrylic acid/AMPS copolymer (Sample 3).

Furthermore, a comparison of Samples 33-44 with Samples 3 and 10 show the unexpected performance advantage of the terpolymers incorporating the substituted acrylamide over terpolymers formed from acrylic acid/AMPs and unsubstituted acrylamide.

Samples 11-13, 18-21, 28-30, 33-35, 38 and 39 show the effect of increasing the amount of the third unit while decreasing the amount of acrylic acid in the terpolymer. In most cases, phosphate stabilization is shown to be improved as the level of the third unit in the terpolymer is increased above 5 weight percent.

Samples 48 and 49 illustrate that further improvements over the terpolymers can be obtained if a selected interpolymer containing both a vinyl ester monomer and an alkyl substituted alkyl acrylamide at concentrations of at least 5 percent by weight are used. In comparison, Sample 47 illustrates that when two vinyl esters are used to form an interpolymer with acrylic acid and AMPS, no substantial improvement over a selected terpolymer containing the same level of either one of these vinyl esters occurs.

The terpolymers and interpolymers of the invention are also effective in stabilizing aqueous systems containing carbonate and sulfate salts. Table 2 illustrates calcium carbonate and calcium sulfate precipitation inhibition. The calcium sulfate data was obtained using a standard test method (i.e. NACE Standard TM-03-74), while the calcium carbonate data was obtained using the same procedure as described in US-A-4,326,980.

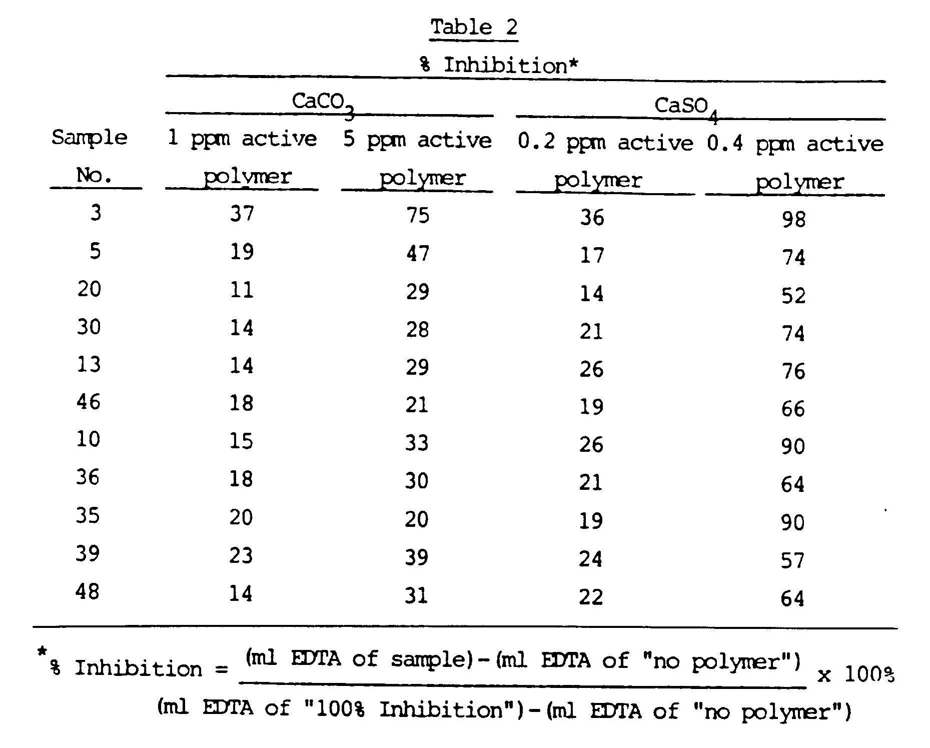

In addition to phosphate, carbonate and sulfate stabilization in aqueous systems, we have also found that the terpolymers and interpolymers of the invention are useful dispersants for suspended inorganic particulates in water. To demonstrate this we simulated an aqueous system containing suspended mud, silt or other hydrophilic particulates, such as calcium carbonate, using aqueous systems containing kaolin clay or iron oxide. The kaolin clay simulates inorganic particulates such as mud, silt or calcium carbonate. Iron oxide was selected because it is a commonly found hydrophobic particulate material in recirculating cooling water. The iron oxide dispersion tests demonstrate the ability of the terpolymers to disperse hydrophobic particulates such as iron phosphate, the various forms of calcium phosphate, iron hydroxide and iron oxide.

The test procedure used for the kaolin dispersancy is as follows:
Into a multiplex cup was placed 430 ml of water containing 200 ppm CaCl₂, as calcium carbonate, and 0.43 grams of hydrite UF Kaolin (1000 ppm kaolin). The mixture was mixed for 10 minutes and the pH of the mixture was then adjusted to pH 7.5 with sodium hydroxide. 100 ml aliquots of the adjusted mixture were placed in 118.3 ml (4 ounces) jars to which 5 ppm of the polymer (0.5 ml of a 0.1% solution adjusted to pH 8.0) was added. The jars were capped and allowed to stand undisturbed for 2 hours. The top 20 ml of each jar was then placed in a 29.6 ml (one ounce) vial and the turbidity of the solution in the vial was measured, in nephelometric turbidity units (NTU), using an HF model DRT 100D turbidimeter. The results are shown in Table 3.

The iron oxide dispersancy tests were performed by placing into a multiplex cup 430 ml of water containing 200 ppm CaCl₂, as calcium carbonate, and 0.30 grams of Fe₂O₃ (Fisher reagent) (700 ppm Fe₂O₃). The mixture was mixed for 15 minutes and the pH was then adjusted to pH 7.5 using sodium hydroxide. 100 ml aliquots were then removed and placed in 118.3 ml (4 ounce) jars to which 3 ppm of polymer (0.3 ml of 0.1% polymer solution adjusted to pH 8.0) were added. The jars were capped and placed on a shake for 15 minutes at low speed. Following the shaking, the jars were allowed to stand undisturbed for 4 hours. The top 20 ml of each jar was then removed, placed in a 29.6 ml (one ounce) vial and turbidity was measured using the HF model 100D turbidimeter in NT's. The higher the NTU value the better the dispersion. The results are also shown in Table 3.

**Table 3**

| Sample | | NTUs | |
|---|---|---|---|
| | | Kaolin | Iron Oxide |
| Control | 1 | 45 | 121 |
| Comparative | 3 | 416 | 373 |
| | 5 | 595 | 340 |
| | 13 | 506 | 552 |
| | 15 | 768 | 396 |
| | 20 | 617 | 648 |
| | 25 | 464 | 582 |
| | 30 | 756 | 455 |
| | 31 | 565 | 672 |
| | 35 | 559 | 799 |
| | 39 | 810 | 603 |

The selected terpolymers generally showed improved particulate dispersancy over conventional copolymer dispersants for both kaolin and iron oxide.

The following Table 4 presents comparative data demonstrating that the terpolymers of the invention yield improved performance as phosphate stabilizers and inorganic particulate dispersants in aqueous systems as compared with physical blends of known copolymers and homopolymers.

Comparative Sample 50 was prepared by blending 19% (active polymer solids) of an acrylic acid/AMPS copolymer (6.7/93.7 wt.%) having a Mw̅ (weight average) of 5070 with 81% (active) of a copolymer of acrylic acid and HEMA (80/20 wt.%, Mw̅ 5460). 24.8 ppm of active polymer mixture was compared against 20 ppm of the terpolymers to ensure that a fair comparison was made. A factor of 1.24 times the copolymer blend composition of 66 wt.% acrylic acid/18 wt.% AMPS and 16 wt.% HEMA resulted in an overall composition of 82 wt.% AA, 22 wt.% AMPS and 20 wt.% HEMA comparable to the terpolymer samples (20 and 25).

Comparative Sample 51 was prepared by blending 66% (active) of an AA/EA copolymer (70/30 wt.%) Mw̅ 5340,25 wt.% (active) of an AA/AMPS copolymer (6.3/93.7 wt.%), Mw̅ 5070, and 9% (active) polyAA Mw̅ 4570.

Comparative Sample 52 was prepared by blending 60% (active) copolymer of AA/HPA (62/38 wt.%) Mw̅ 3000, 25% (active) copolymer of AA/AMPs (6.3/96.7 wt.%) Mw̅ 5070, and 15% (active) of polyAA Mw̅ 4570.

Comparative Samples 53 was prepared by blending 66.7% (active) copolymer of AA/t-BAM (70/30 wt.%), Mw̅ 2700a, 24.5% (active) copolymer of AA/AMPS (6.3/93.7) wt.% Mw̅ 5070, and 8.8% polyAA, Mw̅ 4570.

The results of the comparative tests, conducted according to the same general procedures described above, are represented in Table 4.

**Table 4**

| Terpolymers vs. Blend (Comparison at Equivalent Net Composition) | | | | | |
|---|---|---|---|---|---|
| Sample | Polymer Composition | Mw̅ | % Calcium Phosphate Inhibition (Test Condition 2 at 20 ppm polymer) | Dispersancy | |
| | | | | Kaolin | Iron Oxide |
| | | | | NTU's | |
| 20 | AA/AMPS/HEMA (57/23/20) | 5430 | 96 | 617 | 648 |
| 25 | AA/AMPS/HEMA (57/23/20) | 8070 | 92 | 464 | 582 |
| 50 | Blend AA/AMPS/HEMA (66/18/16) | 5300 | 3 | 95 | 277 |
| 13 | AA/AMPS/EA (57/23/20) | 4840 | 95 | 879 | 742 |
| 51 | Blend AA/AMPS/EA (57/23/20) | 5060 | 11 | 540 | 503 |
| 30 | AA/AMPS/HPA (57/23/20) | 5610 | 91 | -- | -- |
| 31 | AA/AMPS/HPA (57/23/20) | 3970 | 94 | 565 | 672 |
| 52 | Blend AA/AMPS/HPA (54/23/23) | 4800 | 2 | 281 | 337 |
| 39 | AA/AMPS/t BAM (57/23/20) | 4610 | 95 | 810 | 602 |
| 53 | Blend AA/AMPS/t BAM (57/23/20) | 3560 | 14 | 627 | 487 |

Table 4 clearly demonstrates the unexpected superiority of the terpolymers for phosphate stabilization and for inorganic particulate dispersion as compared with blends of copolymers formulated to be substantially equivalent in their overall composition to the composition of the terpolymers.

In addition to dispersing particulates at low concentrations in aqueous systems, we also evaluated the ability of the terpolymers as dispersants for reducing the viscosity of concentrated suspensions or slurries of kaolin clay or calcium carbonate. The test procedure used for the kaolin clay slurries was as follows:

Into a 1 liter stainless steel mixing cup was added 6.13 grams of a 10% solution of the selected polymer at pH about 7.0, 4.66 grams of 20% sodium carbonate solution, and enough water to bring the aqueous solution weight to 210 grams. To this was added 490 grams of ASP 600 kaolin clay and a slurry was formed by mixing the resultant mixture at low speed on a multimixer for about 5 minutes followed by 15 minutes at high speed. A 500 gram aliquot of the resultant 70 wt.% clay slurry with 0.125 wt.% (polymer on clay) dispersant was then removed and placed in a 0.47 litre (one pint) jar which was capped and shaken very gently until the slurry cooled to room temperature. The viscosity of the slurry was then measured using a Brookfield RV viscometer and the pH of the slurry was also measured. To the slurry in 0.47 litre (one pint) jar was added 0.88 grams of 10% polymer solution and 2.05 grams of kaolin clay (to raise the total dispersant level 0.025 wt.% and to keep the kaolin clay solids at 70%). The resultant mixture was then mixed on the multimixer at high speed for two minutes. The viscosity was measured and additional polymer and clay were then added, mixed and the measurements were repeated as described above. The results are shown in Table 5.

**Table 5**

| Kaolin Clay Slurry Dispersancy: 20 rpm Brookfield Viscosity Versus Polymer Dosage | | | | | |
|---|---|---|---|---|---|
| Sample | 0.125% | 0.150% | 0.175% | 0.200% | 0.225% |
| 22 | 1316 | 438 | 408 | 450 | -- |
| 31 | 2634 | 1054 | 696 | 614 | 786 |
| 39 | 2399 | 1748 | 792 | 677 | 746 |

The method used for determining the dispersancy of the terpolymers for concentrated calcium carbonate slurries was as follows:
Into a 1 liter stainless steel mixing cup was added 17.5 grams of a 10% polymer solution of pH about 7.0 and enough water to bring the weight of the aqueous solution to 300 grams. To this was added 700 grams of M60 precipitated calcium carbonate, from Mississippi Lime Company, and then mixed to form a slurry at low speed for about five minutes on the multimixer. The slurry was then mixed for 15 minutes at high speed. 500 grams of the resultant 70 wt.% CaCO₃ slurry with 0.25 wt.% (polymer on CaCO₃) dispersant was then poured into a 0.47 litre (one pint) jar, capped and shaken gently until the slurry cooled to room temperature. The viscosity of the slurry was then measured on a Brookfield RV viscometer. To this slurry was added 1.76 grams of a 10% polymer solution and 4.10 grams of calcium carbonate to raise the total dispersant level 0.05 wt.% while maintaining the slurry solids at 70%. The slurry was then mixed for 2 minutes at high speed on the multimixer and the viscosity was measured. These steps were repeated as described above to demonstrate the reduction in viscosity as shown in Table 6.

**Table 6**

| Calcium Carbonate Slurry Dispersancy 20 rpm Brookfield Viscosity at Various Polymer Dosages | | | | | | | |
|---|---|---|---|---|---|---|---|
| Sample | 0.25% | 0.30% | 0.35% | 0.40% | 0.45% | 0.50% | 0.55% |
| 13 | 31354 | 5900 | 2680 | 2060 | 1514 | 1484 | 1654 |
| 29 | 31294 | 3708 | 1766 | 1212 | 1086 | 1052 | 1154 |

Tables 5 and 6 demonstrate the effectiveness of the terpolymers and interpolymers as dispersants for aqueous kaolin clay and calcium carbonate slurries. As the polymer concentration increases, the viscosity of the slurry decreases until a minimum viscosity is reached. As the polymer concentration is increased above the concentration needed to achieve the minimum viscosity, the viscosity begins to increase. The viscosity of the slurries when no dispersant was added was too high to measure at 20 RPM.

The hydrolytic stability of polymers used in water treatment applications is important. Many water treatment formulations, particularly those containing polyphosphates, must be kept at high pH (pH greater than 11) to prevent reversion of the polyphosphate to orthophosphate. A polymer that is not stable to high pH must be packaged separately from the polyphosphate. Table 7 compares the hydrolytic stability of several of the terpolymers of the invention. This test involved the preparation of a 10% (active) polymer solution in deionized water followed by adjusting the pH of the solution to pH 13.5. The adjusted sample was then placed in a 70°C oven for the intervals indicated in Table 7. The polymers were then tested for their ability to inhibit the phosphate precipitation in high phosphate water (as in Test Condition 2) at 20 ppm polymer concentration. A significant reduction in the percent precipitation inhibition indicates that the polymer is not hydrolytically stable.

**Table 7**

| Calcium Phosphate Precipitation Inhibition as a Function of Hydrolytic Stability during Storage at High pH | | | | |
|---|---|---|---|---|
| Sample | Initial | 3 days | 2 weeks | 1 month |
| 13 | 97 | 36 | -- | 36 |
| 20 | 97 | 66 | 71 | 68 |
| 31 | 94 | 45 | -- | 40 |
| 35 | 98 | 97 | 96 | 86 |
| 39 | 90 | 97 | 96 | 84 |

This Table evidences that the AA/AMPS/vinyl ester terpolymers (Samples 13, 20 and 31), while possessing a high initial performance, are not stable to hyroylysis and would have to be packaged separately from a high pH formulation. Samples 35 and 39 which are terpolymers of AA/AMPS/alkyl substituted acrylamides are hydrolytically stable, maintaining their high initial phosphate precipitation inhibition, and can be formulated at high pH in a single package.

In order for a polymer to function properly in water treatment applications, the polymer must be soluble in the water to which it is added. It is well known that, for a given composition, as the molecular weight of a polymer is decreased, the solubility of the polymer in water increases. Therefore, in order to make a valid comparison of the effect of the composition of the terpolymers on solubility, polymers should be compared at about the same molecular weight. Table 8 shows a comparison of the solubility of selected terpolymers, with copolymers and homopolymers of similar molecular weights. Each of the aqueous solutions contained 100 ppm (active) polymer and 6000 ppm CaCl₂ as calcium carbonate. The Samples were placed in 118.3 ml (4 ounce) jars which were then placed in a water bath at 61°C. The samples were then brought to equilibrium temperature and the percent transmittance as measured by a Brinkman PC/600 colorimeter using a 520 nanometer filter, were recorded. Higher solubility is evidenced by higher percent transmittance.

**Table 8**

| Polymer Solubility | | | |
|---|---|---|---|
| Sample | | Mw̅ | Solubility % Transmittance |
| 54 | Polyacrylic acid | 4500 | 56 |
| 6 | AA/EA (80/20) | 5300 | 82 |
| 3 | AA/AMPS (77/23) | 4500 | 90 |
| 30 | AA/AMPS/HPA (57/23/20) | 5610 | 100 |
| 39 | AA/AMPS/t-BAM (57/23/20) | 4610 | 98 |

Table 8 demonstrates that at about the same Mw̅, the terpolymers or AA/AMPS and either a vinyl ester, monomer or alkyl substituted acrylamide (samples 30 and 39) of the invention are more soluble than copolymers of AA/AMPS or copolymers of AA and a vinyl ester (samples 3 and 6). It is expected that the solubility of an AA/substituted acrylamide copolymer would be similar to the solubility of the AA/EA copolymer, namely, less soluble than the AA/AMPS/substituted acrylamide terpolymer of the invention.

Comparisons of terpolymers of this invention with commercially used boiler treatment polymers provide useful yardsticks of their performance. Typically, polymers are fed to the boiler feedwater at dosages varying from about 0.5 to about 5 mg/l. In recirculating boiler water, where the dissolved solids are concentrated due to the generation of the steam, polymer concentration will typically be between about 5 and about 8 mg/l.

The screening method used to test efficacy of these polymers is based on a method presented at the 46th annual meeting of the International Water Conference in Pittsburgh PA on November 4-7, 1985. A paper titled "Treatment and Temperature Effects on Turbidity and Morphology in Boilers" described a method using a synthetic boiler water containing an exaggerated amount of calcium and magnesium with iron added as Fe₃O₄ and Fe(OH)₃. This synthetic boiler water is comparable to actual boiler water that has been subjected to hardness leakage in its makeup or feedwater. In this method, the ability of a polymer to prevent settling of suspended boiler sludge is determined by measuring turbidity of the suspension after settling for one hour.

The synthetic boiler water used in these tests was prepared as follows:
The following solutions were added to 1500 ml of deionized water adjusted to pH 11.0:
a. 14.78 g of a 5.68 g/l calcium hydroxide solution
b. 14.78 g of a 6.63 g/l magnesium sulfate solution
c. 14.78 g of a 4.24% Na₃PO₄. 12H₂O solution
d. 14.78 g of a 1.81% Na₂SiO₃.9H₂O solution
e. 14.78 g of a 5.41% Na₂CO₂ solution
f. 137.72 g of a suspension containing 228 mg/1 Fe⁺³, prepared from FeCl₃, and adjusted to pH 11.

The above mixtures were transferred to a two liter volumetric flask. To this flask was added 50 mg of Fe₃O₄, and the flask was filled with deionized water to the mark.

100 ml of the synthetic boiler water suspension was added into a 118.3 ml (4 oz) jar, and placed on a laboratory shaker at high speed for 10 minutes.

The jar was then removed from the shaker and 0.5 or 1.0 ml of a 0.1% active polymer solution adjusted to pH 9.5 in deionized water was added (corresponds to 5 or 10 mg/l of active polymer). The jar was then placed on the shaker at high speed for an additional 5 minutes. The top 20 ml of the suspension was pipetted and turbidity was measured in nephelometric turbidity units (NTU). In this test, higher turbidities indicate better dispersing of the sludge in the boiler water.

The solids resulting from mixture of the above components had the following compositions:

| Dissolved solids | |
|---|---|
| phosphate | 46 mg/l |
| silica | 12 mg/l |
| sulfate | 39 mg/l |
| carbonate | 226 mg/l |
| sodium | 214 mg/l |

| Suspended solids | |
|---|---|
| Hydroxyapatite | 57 mg/l |
| Serpentine | 38 mg/l |
| Magnetite | 25 mg/l |
| Hematite | 25 mg/l |

The results of this test are presented in Table 9 below.

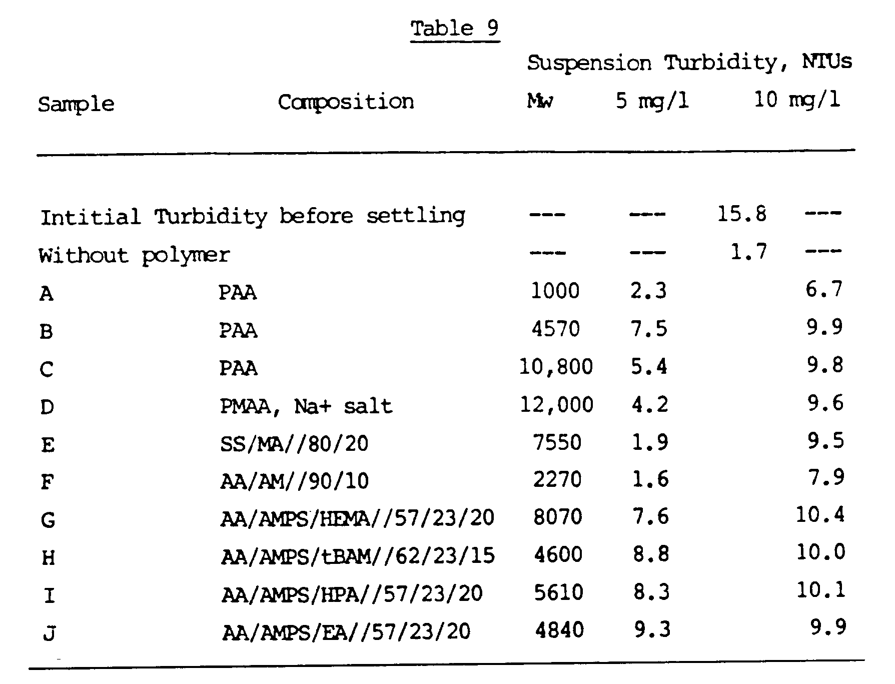

As clearly shown in Table 9 the terpolymers (Samples G-J) of this invention are better able to suspend boiler sludge than currently used polymers, as evidenced by the higher NTU readings at 5 and 10 mg/l added polymer solids.

Further, it has been found that the polymers of this invention are unexpectedly useful as precipitation inhibitors for zinc and its salts in aqueous systems, as exemplified in Table 10.

**Table 10**

| Zinc Hydroxide Stability Test (High Alkalinity) Soluble Zinc, ppm | | |
|---|---|---|
| Sample | pH 8 | pH 9 |
| 3 | 3.8 | 1.4 |
| 5 | 3.9 | 1.1 |
| 13 | 3.8 | 2.1 |
| 30 | 3.9 | 1.9 |
| 20 | 3.9 | 1.5 |
| 10 | 3.8 | 0.8 |
| 35 | 4.0 | 1.9 |
| 37 | 3.9 | 1.7 |
| 48 | 3.9 | 2.9 |
| 1 | 0.6 | 0.3 |

Conditions: 5 ppm Zinc/250 ppm CaCl₂ as CaCO₃/150 ppm MgCl₂ as CaCO₃/300 ppm NaHCO₃ as CaCO₃/20 ppm active polymer/104°F (40°C)/24 hours.

## Claims

1. A water-soluble polymer comprising:-
(i) between 10 and 84 weight percent of units derived from (meth)acrylic acid and/or salt thereof;
(ii) greater than 11 to less than 40 weight percent of units derived from acrylamido alkyl substituted and/or acrylamido aryl substituted sulfonic acid and/or salt thereof; and
(iii) from at least 5 to 50 weight percent of units derived from one or more of:
(a) vinyl esters, other than polyethylene - and polypropylene - glycol (meth)acrylates and the ether derivatives thereof;
(b) vinyl acetate; and
(c) substituted acrylamides excepting units derived from acrylamido alkyl substituted and/or acrylamido aryl substituted sulfonic acid and/or salt thereof;
and wherein the percentages are based on the total weight of (i), (ii) and (iii).

2. A polymer as claimed in claim 1 having a weight average molecular weight of from 3000 to 25000.

3. A polymer as claimed in claim 2 which is a terpolymer having a weight average molecular weight of from 4000 to 8000.

4. A polymer as claimed in any of claims 1 to 3, wherein said units derived from acrylamido alkyl substituted and/or acrylamido aryl substituted sulfonic acid and/or salt thereof are characterized by the formula (B): 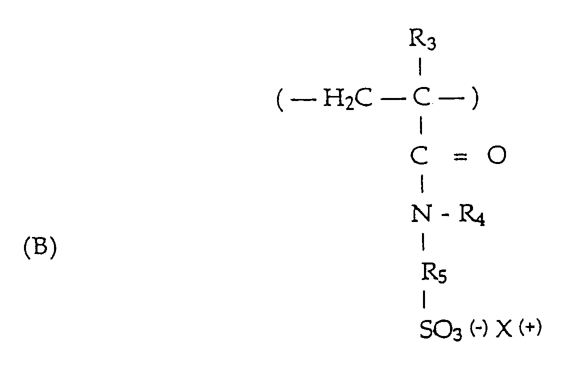 where
R₃ is hydrogen or methyl;
R₄ is hydrogen or a C₁ to C₄ alkyl group
R₅ is a C₁ to C₈ alkyl group or a C₈ to C₁₀ aralkyl group; and
X is hydrogen, a metal cation or N-(R₂)₄ where
R₂ is hydrogen, a C₁ to C₄ alkyl group, a C₁ to C₄ hydroxyalkyl group, or a mixture of such groups.

5. A polymer as claimed in claim 4 wherein the units derived from acrylamido alkyl substituted and/or acrylamido aryl substituted sulfonic acid and/or salt thereof comprise units derived from 2-acrylamido-2-methyl propane sulfonic acid.

6. A polymer as claimed in any of claims 1 to 5 wherein said units derived from vinyl esters are characterized by the formula (C):- 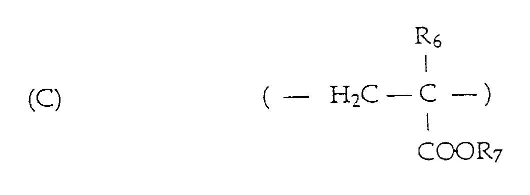 where
R₆ is hydrogen or CH₃; and
R₇ is a C₁ to C₆ alkyl group, a C₆ to C₁₀ aryl group, a C₆ to C₁₀ aralkyl group or 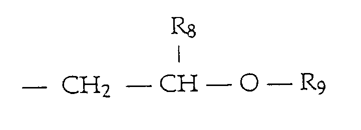
where
R₈ is hydrogen or CH₃; and
R₉ is a C₁ to C₆ alkyl group or hydrogen

7. A polymer as claimed in any of claims 1 to 6 wherein said units derived from substituted acrylamide are characterized by the formula (E):- 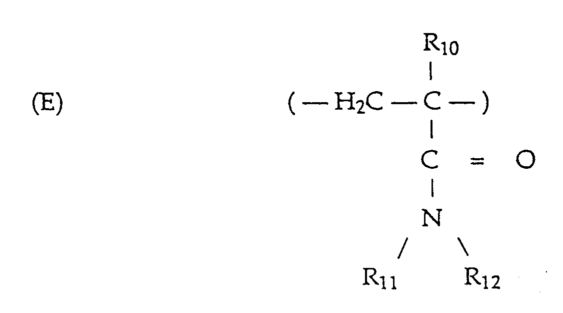 where
R₁₀ is hydrogen or CH₃; and
R₁₁ and R₁₂ are either hydrogen, a C₁ to C₈ alkyl, a C₆ to C₈ cycloalkyl, a benzyl group, or 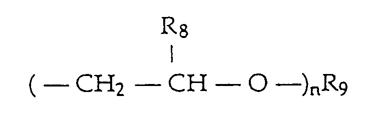
where
R₈ is hydrogen or CH₃;
R₉ is a C₁ to C₆ alkyl group or hydrogen;
n is an integer of from 1 to 3; and such that R₁₁ and R₁₂ are not both hydrogen.

8. A polymer as claimed in any of claims 1 to 7, which is a terpolymer comprising 57 weight percent of units derived from (meth)acrylic acid and/or salt thereof, 23 percent by weight of units derived from 2-acrylamido-2-methyl propane sulfonic acid, and 20 weight percent of said units derived from one or more of vinyl esters, vinyl acetate and substituted acrylamides, said polymer having a weight average molecular weight of from 4500 to 5500.

9. A polymer as claimed in any of claims 1 to 7, which comprises between 10 and 84 weight percent of units derived from acrylic acid, from greater than 11 to less than 40 weight percent of units derived from 2-acrylamido-2-methyl propane sulfonic acid, and from at least 5 to 50 percent of units derived from said substituted acrylamide, said polymer being stable to hydrolysis under high pH conditions.

10. A method for stabilizing aqueous systems, which comprises adding to said aqueous system an effective amount of a water-soluble polymer as claimed in any of claims 1 to 9.

11. A method as claimed in claim 10, wherein the stabilization comprises one or more of: (a) inhibiting the precipitation of inorganic phosphate, carbonate or sulfate salts in the aqueous system; (b) dispersing, in the aqueous system, inorganic particulates which are one or more of iron, zinc, salts thereof, mud, silt, and clay; and (c) reducing the viscosity of the aqueous system which is a concentrated aqueous slurry of kaolin or calcium carbonate.

12. A method as claimed in claim 10, wherein said aqueous system is a boiler water containing dissolved and suspended solids which are one or more of calcium carbonate, calcium phosphate, magnesium hydroxide, serpentine, magnetite and hematite, and wherein the concentration of said polymer added to said aqueous boiler water is from 0.1 to 500 parts per million.

## Patentansprüche

1. Wasserlösliches Polymeres umfassend:
(i) zwischen 10 und 84 Gew.-% Einheiten, die auf (Meth)acrylsäure und/oder Salze davon zurückgehen,
(ii) mehr als 11 bis Weniger als 40 Gew.-% Einheiten, die auf Acrylamidoalkyl substituierte und/oder auf Acrylamidoaryl substituierte Sulfonsäure und/oder Salz davon zurückgehen und
(iii) von Wenigstens 5 bis 50 Gew.-% Einheiten, die auf einen oder mehrere von
(a) andere Vinylester als Polyethylenglykol- und Polypropylenglykol-(meth)acrylate und Ether-Derivate davon,
(b) Vinylacetat und
(C) substituierte Acrylamide, mit Ausnahme von Einheiten, die auf Acrylamidoalkyl substituierte und/oderAcrylamidoaryl substituierte Sulfonsäure und/oder Salze davon abgeleitet sind,
wobei sich die Prozentsätze auf das Gesamtgewicht von (i), (ii) und (iii) beziehen.

2. Polymeres nach Anspruch 1 mit einem Gewichtsmittel des Molekulargewichts von 3000 bis 25000.

3. Polymeres nach Anspruch 2, das ein Terpolymeres mit einem Gewichtsmittel des Molekulargewichts von 4000 bis 8000 ist.

4. Polymeres nach einem der Ansprüche 1 bis 3, wobei die Einheiten, die auf Acrylamidoalkyl substituierte und/oder Acrylamidoaryl substituierte Sulfonsäure und/oder Salze davon zurückgehen, durch die Formel (B) gekennzeichnet sind 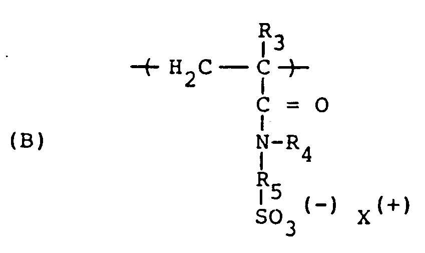 worin
R₃ Wasserstoff oder Methyl ist,
R₄ Wasserstoff oder eine C₁- bis C₄-Alkylgruppe ist,
R₅ eine C₁- bis C₈-Alkylgruppe oder eine C₈- bis C₁₀-Aralkylgruppe ist und
X Wasserstoff, ein Metallkation oder N-(R₂)₄ ist, wobei
R₂ Wasserstoff, eine C₁- bis C₄-Alkylgruppe, eine C₁- bis C₄-Hydroxyalkylgruppe oder eine Mischung aus diesen Gruppen ist.

5. Polymeres nach Anspruch 4, wobei die Einheiten, die auf Acrylamidoalkyl substituierte und/oder Acrylamidoaryl Substituierte Sulfonsäure Und/oder Salze davon zurückgehen, Einheiten umfassen, die auf 2-Acryiamido-2-methylpropansulfonsäure zurückgehen.

6. Polymeres nach einem der Ansprüche 1 bis 5, wobei die Einheiten, die auf Vinylester zurückgehen,
gekennzeichnet sind durch die Formel (C) 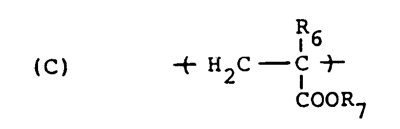 worin
R₆ Wasserstoff oder CH₃ ist und
R₇ eine C₁- bis C₆-Alkylgruppe, eine C₆-bis C₁₀-Arylgruppe, eine C₆- bis C₁₀. Aralkylgruppe oder 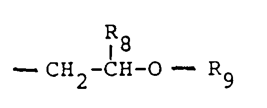
worin
R₈ Wasserstoff oder CH₃ und
R₉ eine C₁- bis C₆-Alkylgruppe oder Wasserstoff ist.

7. Polymeres nach einem der Ansprüche 1 bis 6, wobei die Einheiten, die auf substituiertes Acrylamid zurückgehen, durch die Formel (E) 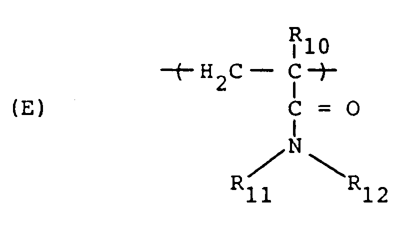 charakterisiert sind, worin
R₁₀ Wasserstoff oder CH₃ ist und
R₁₁ und R₁₂ entweder Wasserstoff, eine C₁- bis C₈-Alkylgruppe, eine C₆- bis C₈-Cycloalkylgruppe, eine Benzylgruppe oder 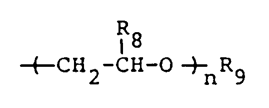 sind, wobei
R₈ Wasserstoff oder CH₃ ist,
R₉ eine C₁- bis C₆-Alkylgruppe oder Wasserstoff ist,
n eine ganze Zahl von 1 bis 3 ist, und wobei
R₁₁ und R₁₂ nicht beide Wasserstoff sind.

8. Polymeres nach einem der Ansprüche 1 bis 7, bei dem es sich um ein Terpolymeres handelt, umfassend 57 Gew.-% Einheiten, die auf (Meth)acrylsäure und/oder Salze davon zurückgehen, 23 Gew.-% Einheiten, die auf 2-Acrylamido-2-methylpropansulfonsäure zurückgehen und 20 Gew.-% Einheiten, die auf eine oder mehrere Von Vinylester, Vinylacetat und substituierte Acrylamide zurückgehen, wobei das Polymere ein Gewichtsmittel des Molekulargewichts von 4500 bis 5500 besitzt.

9. Polymeres nach einem der Ansprüche 1 bis 7, das 10 bis 84 Gew.-% Einheiten, die auf Acrylsäure zurückgehen, mehr als 11 bis weniger als 40 Gew.-% Einheiten, die auf 2-Acrylamido-2-methylpropansulfonsäure zurückgehen, und von wenigstens 5 bis 50% Einheiten, die auf substituiertes Acrylamid zurückgehen, aufweist, wobei das Polymere gegenüber einer Hydrolyse unter hohen pH-Bedingungen stabil ist.

10. Verfahren zur Stabilisierung von wäßrigen Systemen, welches die Zugabe einer wirksamen Menge eines wasserlöslichen Polymeren gemäß einem der Ansprüche 1 bis 9 zu dem wäßrigen System umfaßt.

11. Verfahren nach Anspruch 10, wobei die Stabilisierung eine oder mehrere der folgenden Schritte umfaßt: (a) Inhibieren der Ausfällung von anorganischen Phosphat-, Carbonat- oder Sulfatsalzen in dem wäßrigen System, (b) Dispergieren von anorganischen Einzelteilchen in dem wäßrigen System, die eines oder mehrere von Eisen, Zink, Salzen davon, Schlamm, Kieselschlamm und Ton sind und (c) Reduzieren der Viskosität des wäßrigen Systems, das eine konzentrierte wäßrige Aufschlämmung von Kaolin oder Kalziumcarbonat ist.

12. Verfahren nach Anspruch 10, wobei das wäßrige System ein Heizkesselwasser ist, das gelöste und suspendierte Feststoffe enthält, die eines oder mehrere von Kalziumcarbonat, Kalziumphosphat, Magnesiumhydroxid, Serpentin, Magnetit und Hämatit sind und wobei die Konzentration des dem Heizkesselwasser zugesetzten Polymeren 0,1 bis 500 ppm beträgt.

## Revendications

1. Un polymètre soluble dans l'eau comprenant :
(i) entre 10 et 84 % en poids de motifs dérivés d'acide (méth)acrylique et/ou d'un de ses sels,
(ii) plus de 11 et moins de 40 % en poids de motifs dérivés d'acide sulfonique acrylamidoalcoyl-substitue et/ou d'acide sulfonique acrylomidoaryl-substitué et/ou de leurs sels et
(iii) au moins 5 à 50 % en poids de motifs dérivés d'un ou plusieurs de :
(a) des esters vinyliques autres que les (méth)acrylates de glycol-polypropylène et polyéthylène et leurs dérivés éthers ;
(b) l'acétate de vinyle et
(c) les acrylamides substitués à l'exception des motifs dérivés d'acide sulfonique acrylamidoalcoyl-substitué et/ou acrylamidoaryl-substitué et/ou de leurs sels ;
et dans lequel les pourcentages sont exprimés relativement au poids total de (i), (ii) et (iii).

2. Un polymère selon la revendication 1 ayant une moyenne en poids du poids moléculaire de 3 000 à 25 000.

3. Un polymère selon la revendication 2 qui est un terpolymère ayant une moyenne en poids du poids moléculaire de 4 000 à 8 000.

4. Un polymère selon l'une quelconque des revendications 1 à 3, dans lequel lesdits motifs dérivés d'acide sulfonique acrylamidoalcoyl-substitué et/ou acrylamidoaryl-substitué et/ou de leurs sels sont caractérisés par la formule (B) : 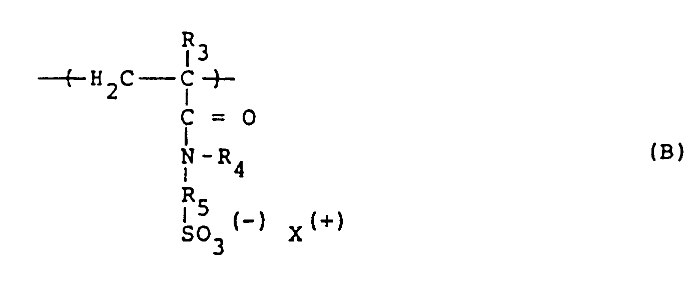 dans laquelle R₃ est un hydrogène ou un méthyle ;
R₄ est un hydrogène ou un groupe alcoyle en C₁ à C₄ ;
R₅ est un groupe alcoyle en C₁ à C₈ ou un groupe aralcoyle en C₈ à C₁₀ ; et
X est un hydrogène, un cation métallique ou N-(R₂)₄ où
R₂ est un hydrogène, un groupe alcoyle en C₁ à C₄, un groupe hydroxyalcoyle en C₁ à C₄ ou un mélange de tels groupes.

5. Un polymère selon la revendication 4, dans lequel les motifs dérivés d'acide sulfonique acrylamidoalcoyl-substitué et/ou acrylamidoaryl-substitué et/ou de leurs sels comprennent des motifs dérivés d'acide 2-acrylamido-2-méthylpropanesulfonique.

6. Un polymère selon l'une quelconque des revendications 1 à 5, dans lequel lesdits motifs dérivés d'esters vinyliques sont caractérisés par la formule (C) : 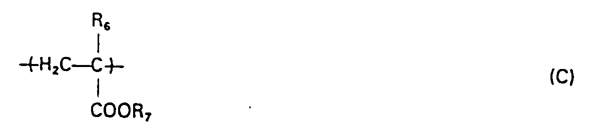 dans laquelle R₆ est un hydrogène ou CH₃ ; et
R₇ est un groupe alcoyle en C₁ à C₆, un groupe aryle en C₆ à C₁₀, un groupe aralcoyle en C₆ à C₁₀ ou 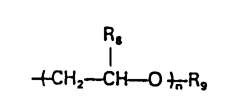 où R₈ est un hydrogène ou CH₃ ; et
R₉ est un groupe alcoyle en C₁ à C₆ ou un hydrogène.

7. Un polymère selon l'une quelconque des revendications 1 à 6, dans lequel lesdits motifs dérivés d'un acrylamide substitué sont caractérisés par la formule (E) : 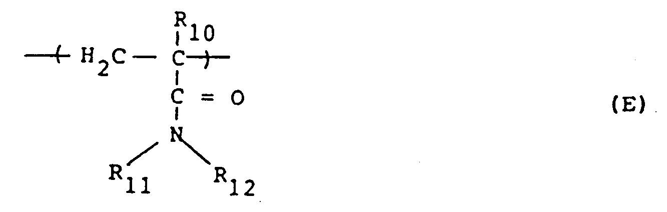 dans laquelle R₁₀ est un hydrogène ou CH₃ ; et
R₁₁ et R₁₂ sont soit un hydrogène, un alcoyle en C₁ à C₈, un cycloalcoyle en C₆ à C₈, un groupe benzyle, soit 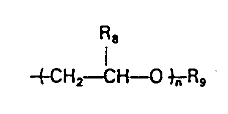 où R₈ est un hydrogène ou CH₃ ;
R₉ est un groupe alcoyle en C₁ à c₆ ou un hydrogène ;
n est un entier de 1 à 3 ; et
R₁₁ à R₁₂ n'étant pas tous deux un hydrogène.

8. Un polymère selon l'une quelconque des revendications 1 à 7, qui est un terpolymère comprenant 57 % en poids de motifs dérivés d'acide (méth)acrylique et/ou d'un de ses sels, 23 % en poids de motifs dérivés d'acide 2-acrylamido-2-méthylpropanesulfonique et 20 % en poids de motifs dérivés d'un ou plusieurs des esters vinyliques, de l'acétate de vinyle et des acrylamides substitués, ledit polymère ayant une moyenne en poids du poids moléculaire de 4 500 à 5 500.

9. Un polymères selon l'une quelconque des revendications 1 à 7, qui comprend entre 10 et 84 % en poids de motifs dérivés d'acide acrylique, plus de 11 à moins de 40 % en poids de motifs dérivés d'acide 2-acrylamido-2-méthylpropanesulfonique et au moins 5 à 50 % de motifs dérivés dudit acrylamide substitué, ledit polymère étant stable à l'hydrolyse dans des conditions de pH élevé.

10. Un procédé pour stabiliser les systèmes aqueux, qui comprend l'addition auxdits systèmes aqueux d'une quantité efficace d'un polymère soluble dans l'eau selon l'une quelconque des revendications 1 à 9.

11. Un procédé selon la revendication 10, dans lequel la stabilisation comprend un ou plusieurs de : (a) l'inhibition de la précipitation des sels minéraux de type phosphate, carbonate ou sulfate dans le système aqueux ; (b) la dispersion dans le système aqueux de particules minérales qui sont constituées d'un ou plusieurs du fer, du zinc, de leurs sels, de la boue, du limon et de l'argile ; et (c) la réduction de la viscosité du système aqueux qui est une suspension aqueuse concentrée de kaolin ou de carbonate de calcium.

12. Un procédé sleon la revendication 10, dans lequel ledit système aqueux est une eau de chaudière contenant des solides dissous et en suspension qui sont un ou plusieurs du carbonate de calcium, du phosphate de calcium, de l'hydroxyde de magnésium, de la serpentine, de la magnétite et de l'hématite, et dans lequel la concentration dudit polymère ajouté à ladite eau de chaudière est de 0,1 à 500 parties par million.
